# EUROPEAN PATENT APPLICATION

(11) **EP 3 118 698 A1**
(43) Date of publication of application: **18.01.2017**
(21) Application number: 16178305.5
(22) Date of filing: 07.07.2016
(51) Int. Cl.: G05B 19/402, B23Q 15/14, B23Q 17/20

(54) **MACHINE TOOL CONTROL & MEASUREMENT SYSTEM**

(30) Priority: 14.07.2015 GB 201512297
(71) Applicant: Airbus Operations Limited, Bristol BS34 7PA (GB)
(72) Inventor: GODFREY, Matthew, Bristol BS34 7PA (GB)
(74) Representative: Worthington, Richard Easton

(57) **Abstract**

A computer numerical control machine tool with a machine head having one or more process tools. The machine head is moveable with respect to a workpiece. A position sensor system detects the position of the machine head relative to the workpiece. A controller coupled to the position sensor system provides closed loop control of the position of the machine head relative to the workpiece. The position sensor system includes an ultrasonic probe. Also a method of controlling the position of a computer numerical control machine tool.

## Description

### FIELD OF THE INVENTION

The present invention relates to a control and measurement system for a machine tool such as a computer numerical control machine tool, and a method therefor.

### BACKGROUND OF THE INVENTION

Computer numerical control (CNC) machine tools are used widely in manufacturing industries to perform automated production tasks. CNC machine tools typical have a machine head which can carry process tools for a variety of processes, such as drilling, cutting etc. and these process tools may be interchangeable. Once a workpiece is installed the CNC machine tool can be programmed to perform a series of steps on the workpiece to produce a part in a highly automated process with great accuracy.

In the aircraft manufacturing industry it is known to use a CNC machine tool in the manufacture of an aircraft wing. A typical aircraft wing construction includes joining wing covers (or skins) to longitudinal spars and transverse ribs. The covers may have longitudinal stiffeners (known as stringers) attached or integrally formed therewith prior to assembly with the ribs and spars to form a "wing box".

In the process of assembling the wing box all of the ribs and spars needed to form the complete wing box are typically arranged in a jig to ensure dimensional accuracy. The covers are then offered up to the ribs and spars in the jig and then drilled before final fasteners are installed to fix the covers to the ribs and spars. To avoid unwanted pre-stresses and to ensure that the completed wing box conforms to the design shape the covers, ribs and spars are not pre-drilled prior to assembly. Also, the cover must be drilled from the side that will form the aerodynamic surface due to machine tool accessibility constraints and, in the case the cover comprises laminate composite materials, to ensure that any drill hole exit delamination is not on the outer aerodynamic surface.

Thermal expansion and manufacturing tolerances make it difficult to locate the CNC machine tool for performing the drilling operations to align with the rib feet and spar flanges hidden behind the cover. The rib feet particularly may have only a small land around the intended fastener hole location so accurate fastener positioning is crucial.

A CNC machine tool in current use for wing box assembly uses a magnetic field sensor to align the machine tool with magnets manually installed in blind holes formed at the desired fastener locations on the inner surface of the wing cover, i.e. the side opposite the outer surface that will form the aerodynamic surface. This solution provides the required positioning accuracy but has a drawback in that the installation and subsequent removal of very many magnets on the wing cover makes use of the CNC machine tool a two-man operation.

The present invention aims to solve this problem to facilitate one-man operation of the machine tool.

### SUMMARY OF THE INVENTION

The invention relates to a computer numerical control machine tool comprising a machine head having one or more process tools and moveable with respect to a workpiece, and an ultrasonic probe. The ultrasonic probe may be used to measure material thickness of the workpiece for positioning the machine head relative to the workpiece and/or for measuring exit delamination of a hole formed by the machine tool.

A first aspect of the invention provides a computer numerical control machine tool comprising a machine head having one or more process tools and moveable with respect to a workpiece, a position sensor system for detecting the position of the machine head relative to the workpiece, and a controller coupled to the position sensor system for closed loop control of the position of the machine head relative to the workpiece, wherein the position sensor system includes an ultrasonic probe.

A further aspect of the invention provides a method of controlling the position of a computer numerical control machine tool, the machine tool comprising a machine head having one or more process tools and moveable with respect to a workpiece, a position sensor system including an ultrasonic probe, and a controller coupled to the position sensor, and the method comprises detecting the position of the machine head relative to the workpiece with the position sensor system, and closed loop control of the position of the machine head relative to the workpiece with the controller.

The invention is advantageous in that the ultrasonic position sensor system can detect the location of a feature of the workpiece on a side of the workpiece opposite to that where the machine tool is located but without requiring positioning devices, such as magnets or machine readable sensors, to be installed by a second operator. In this way the machine tool facilitates single operator operations. The absence of positioning magnets such as those currently used in the art may enable machine processing of materials such as Titanium which are known to distort the magnetic field of such magnets and until now have required alternative processing techniques.

The position sensor system may be configured to use the ultrasonic probe for measuring material thickness of the workpiece.

The position sensor system may be configured to measure the material thickness in the vicinity of a predetermined location on the workpiece.

The position sensor system may be configured to measure the material thickness of the workpiece by scanning along at least one axis.

The scan may be performed along two orthogonal axes.

The position sensor system may be configured to determine a geometric centre of a workpiece feature having a material thickness different to that of the workpiece feature environs. For example, the position sensor system may be used to determine the centre of a blind hole formed in the workpiece. Alternatively the position sensor may be used to determine the centre of a land around an intended fastener location.

The position sensor system may be configured to determine the material thickness profile of a workpiece feature. For example, where the workpiece feature is a blind hole the material thickness at the blind hole will be reduced compared to the surrounding material thickness.

The machine tool may be operable to automatically perform a process machining operation on the workpiece once the machine head has been automatically aligned with workpiece using the position sensor system.

The machine tool may be a multi-axis machine tool for fully automated drilling of holes for final fasteners in aircraft wing box components in an aircraft wing box assembly jig.

### BRIEF DESCRIPTION OF THE DRAWINGS

Embodiments of the invention will now be described with reference to the accompanying drawings, in which:
Figure 1 shows a schematic view of an aircraft wing box jig with ribs and spars installed, ready to receive the wing covers;
Figure 2 shows a CNC machine tool for automated drilling and countersinking holes for fasteners to attach the covers to the ribs and spars in the jig;
Figure 3 shows a partial view of the wing cover having a blind locating hole formed in its inner surface;
Figure 4 shows a partial detail view of the wing cover when installed in the jig adjacent a rib foot and the CNC machine tool, with the position sensor system of the machine tool proximate the blind locating hole;
Figure 5 shows a partial detail view of the wing cover, the rib foot and the CNC machine tool, with the machine head aligned for a drilling process;
Figure 6 shows a partial detail view of the wing cover, the rib foot and the CNC machine tool, with the machine head advanced during the drilling process;
Figure 7 shows a partial detail view of the wing cover, the rib foot and the CNC machine tool, with the machine head retracted following the drilling process; and
Figure 8 shows a partial detail view of the wing cover fastened to the rib foot.

### DETAILED DESCRIPTION OF EMBODIMENT(S)

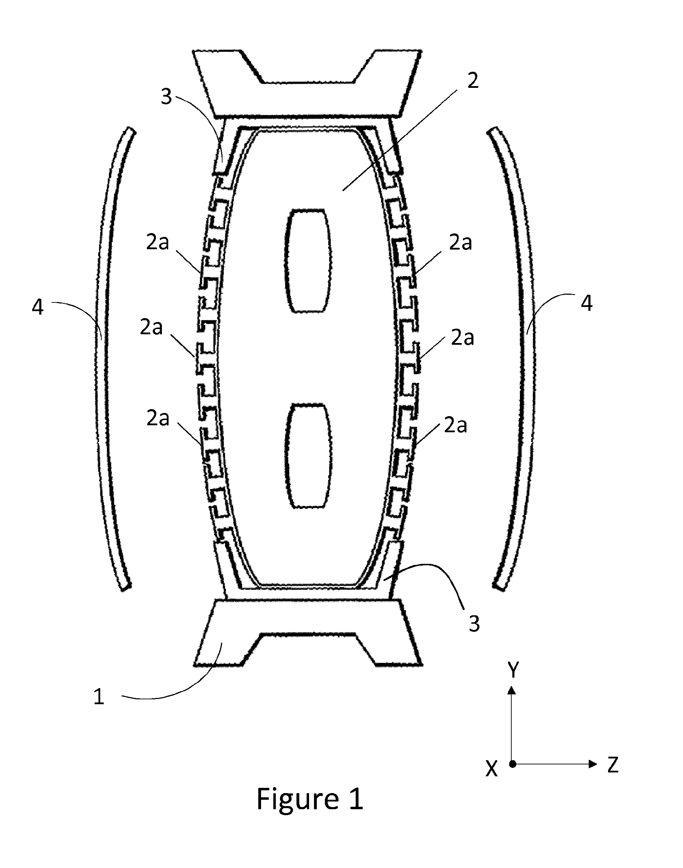

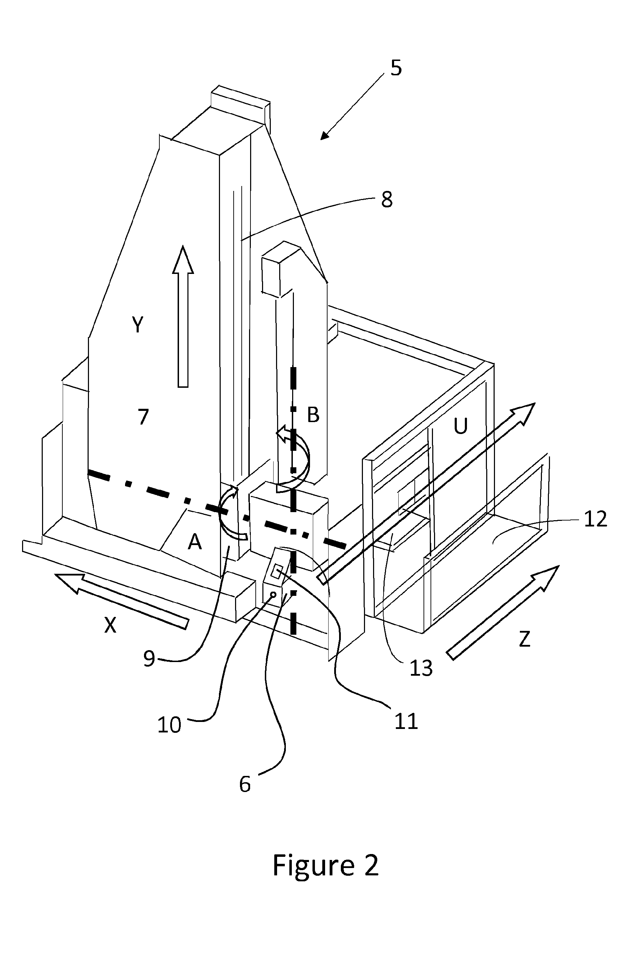

Figure 1 shows a side view of an aircraft wing box jig 1 with a plurality of ribs 2 (only one of which is visible in Figure 1) coupled to front and rear spars 3 installed in the jig 1 and ready to receive wing covers 4. The wing covers 4 are attached to rib feet 2a of the ribs 2 by an automated process using a computer numerical control (CNC) machine tool 5, shown in Figure 2.

The machine tool 5 is a 5-axis machine tool configured for fully automated drilling and slave bolt insertion for assembling the wing covers 4 to the rib feet 2a. The machine tool is designed to produce holes for final fasteners to fasten the wing covers 4 to the ribs 2. The machine tool may perform additional operations, such as drilling off holes for engine pylon reinforcings, etc. The machine tool is in essence a travelling column post mill with a 5-axis machine head 6. The machine head is configured to provide a gap closing pressure, e.g. to press the wing cover 4 onto the rib feet 2a, during machine processing, and also has the capability to bring one of a variety of process tools to the tool point for drilling and fastening operations.

The machine tool 5 is mounted upon rails (not shown) for movement along the X-axis so that it is able to travel the full length of the wing assembly jig 1. The machine tool 5 includes a machine column 7 having rails 8 for vertical movement of the machine head 6 along the Y-axis. Mounted to the Y-axis rails 8 is a Y-axis sled 9 having a rotary table bearing having an axis parallel to X and providing a rotation in A to accommodate cord-wise curvature of the wing cover 4. A similar arrangement provides for rotation in the B-axis, around an axis parallel to Y. The machine head 6 sits below the A-B pivot and includes a plurality of interchangeable process tools on a shuttle table. The machine head has a thrust axis U, which is parallel to the z-axis when A is zero. Movement along all axes is servo-controlled.

The machine head includes a pressure foot 10 and a through-skin sensor (TSS) 11. The TSS 11 is called automatically by the CNC machine tool 5. The TSS 11 forms part of a position sensor system and allows an operator to locally re-zero the machine tool as desired. The TSS 11 may also form part of a measurement system for measuring the profile of a workpiece feature. The process tools of the machine head 6 may include a drill spindle, a slave bolt detection tool, a hole diameter probe, a bolt insertion tool, or any of a variety of process tools, as required. Finally, the machine tool 5 includes an operator platform 12 with an interface console 13.

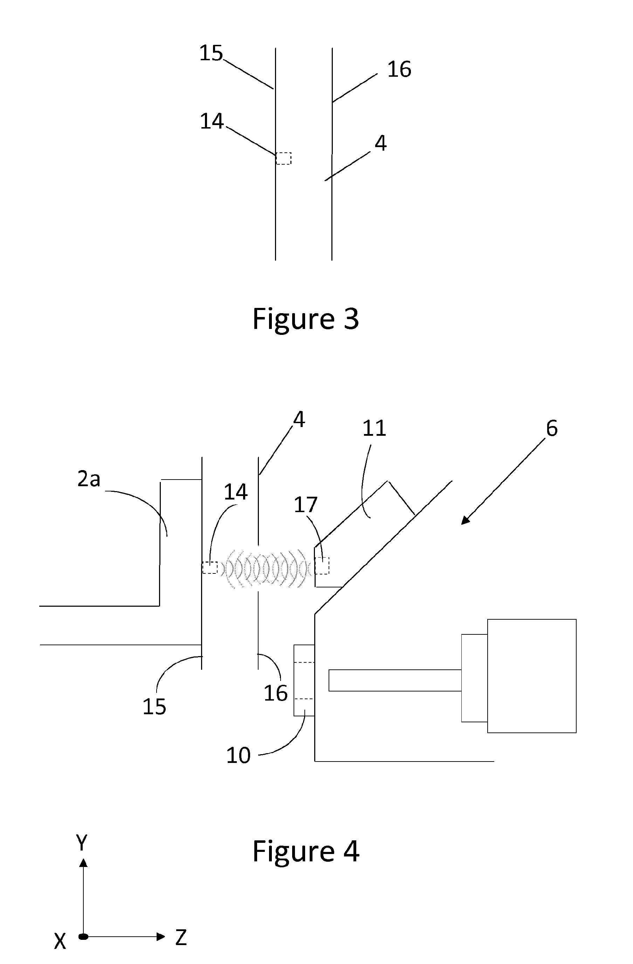

Figure 3 shows a partial view of one of the wing covers 4 having a predrilled blind locating hole 14 formed in its inner surface 15, this being opposite its outer surface 16 which will form the outer aerodynamic surface of the completed aircraft wing. Figure 4 shows the wing cover 4 having the blind locating hole 14 when installed in the jig 1 (not visible in Figure 4) adjacent a rib foot 2a and with the machine head 6 in close proximity such that the TSS 11 is approximately aligned in the X and Y directions with the position of the blind locating hole 14.

The TSS 11 includes an ultrasonic probe 17 which emits an ultrasonic wave towards the wing cover 4 from the side nearest the outer surface 16 of the wing cover 4. The ultrasonic wave travels through the thickness of the wing cover 4 and reflects back a reflected ultrasonic wave that is distorted by the blind locating hole 14 due to the differing material thickness of the wing cover at the location of the blind locating hole 14 as compared with the surrounding material thickness. The reflected ultrasonic wave is received at the ultrasonic probe 17.

The output from the TSS 11 is coupled to a controller of the machine tool position sensor system which analyses the reflected ultrasonic wave to compute the precise location of the blind locating hole 14 in the X-Y-Z coordinate system by closed loop control. In the preferred embodiment the position sensor system uses the TSS 11 to measure the material thickness of the wing cover by scanning along the X and Y axes so as to determine a geometric centre of the blind locating hole 14. Since the blind locating hole 14 is predrilled in the wing cover 4 prior to assembly in the jig 1 the machine tool 5 can be precisely locally re-zeroed off the blind locating hole 14.

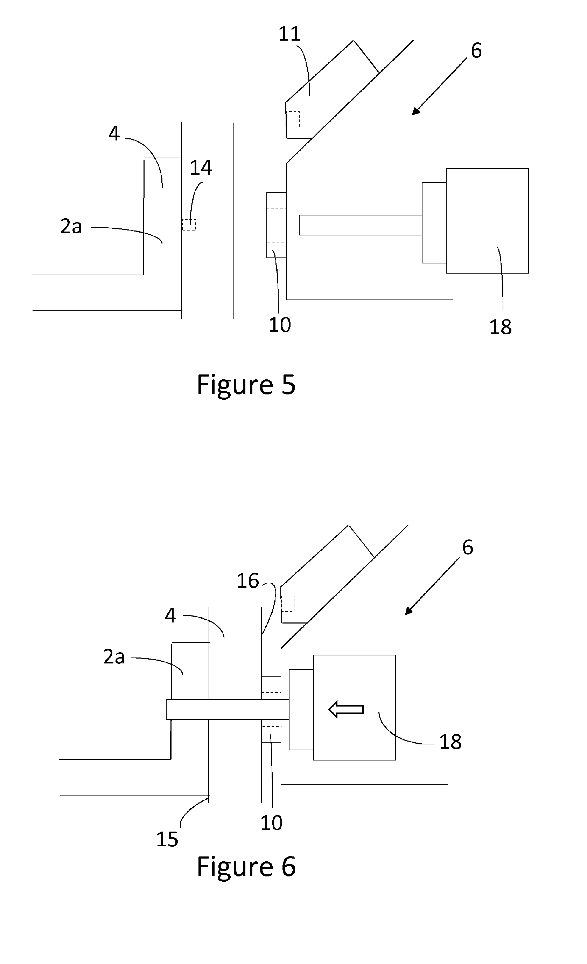

Turning next to Figure 5 the machine tool 6, having been locally re-zeroed, is aligned such that one of the process tools, in this case the drill spindle 18, is precisely aligned with the desired fastener hole location for fastening the wing cover 4 to the rib foot 2a. As shown in Figure 6 the machine head 6 is advanced such that the pressure foot 10 contacts the outer surface 16 of the wing cover 4 to apply a gap closing pressure to the wing cover 4. This causes the inner surface 15 of the wing cover 4 to bear against the rib foot 2a. The drill spindle 18 is then advanced along U to drill a hole through the wing cover 4 and the rib foot 2a.

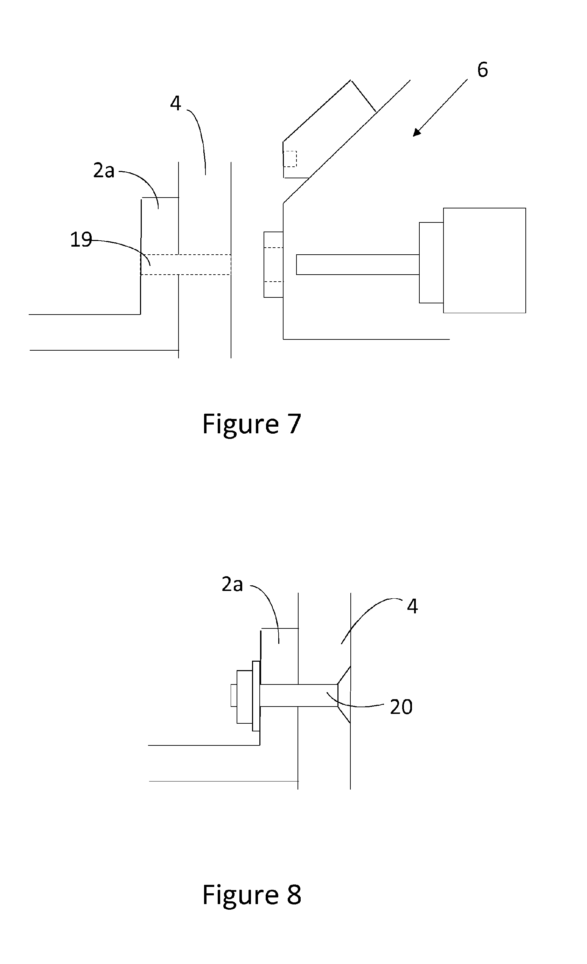

Following retraction of the drill spindle 18 and the machine head 6 the completed through-hole 19 is shown in Figure 7. One or more further processes may be performed by the machine tool, such as countersinking, deburring, etc., before a final fastener 20 is installed to fasten the wing cover 4 to the rib foot 2a, as shown in Figure 8. The deburring may be performed manually after the cover 4 has been removed and prior to fastener installation.

The machine tool may also use the TSS 11 to measure exit delamination of the hole drilled by the drill spindle 18 where the rib foot 2a, the cover 4, or other workpiece component(s), are laminate components, e.g. comprising fibre reinforced composite. The machine tool may position the TSS 11 adjacent the drilled hole 19, measure the profile of the drilled hole, and output a measurement of the extent of any exit delamination around the periphery of the hole. Further processing, by the machine tool 5 or manually, may be performed to address any excessive exit delamination prior to installation of the final fasteners.

As an alternative to picking up the location of the pre-drilled blind hole, the position sensor system may use the TSS 11 to pick up the edge profile of the rib foot 2a, or other workpiece feature. This may obviate any need for the pre-drilled blind holes.

The machine tool 5 may use the TSS 11 to scan in orthogonal directions, or may scan in one direction only, or may scan in multiple directions. The position sensor system may use the TSS 11 to locate the centre of a thinnest part of the workpiece, or a workpiece feature edge.

Although the invention has been described above with reference to one or more preferred embodiments, it will be appreciated that various changes or modifications may be made without departing from the scope of the invention as defined in the appended claims.

## Claims

1. A computer numerical control machine tool comprising a machine head having one or more process tools and moveable with respect to a workpiece, a position sensor system for detecting the position of the machine head relative to the workpiece, and a controller coupled to the position sensor system for closed loop control of the position of the machine head relative to the workpiece, wherein the position sensor system includes an ultrasonic probe.

2. A machine tool according to claim 1, wherein the position sensor system is configured to use the ultrasonic probe for measuring material thickness of the workpiece.

3. A machine tool according to claim 2, wherein the position sensor system is configured to measure the material thickness in the vicinity of a predetermined location on the workpiece.

4. A machine tool according to claim 2 or claim 3, wherein the position sensor system is configured to measure the material thickness of the workpiece by scanning along at least one axis, preferably wherein the scan is performed along two orthogonal axes.

5. A machine tool according to any of claims 2 to 4, wherein the position sensor system is configured to determine a geometric centre of a workpiece feature having a material thickness different to that of the workpiece feature environs.

6. A machine tool according to any of claims 2 to 4, wherein the position sensor system is configured to determine the material thickness profile of a workpiece feature.

7. A machine tool according to any preceding claim, wherein the machine tool is operable to automatically perform a process machining operation on the workpiece once the machine head has been automatically aligned with workpiece using the position sensor system.

8. A machine tool according to any preceding claim, wherein the machine tool is a multi-axis machine tool for fully automated drilling of holes for final fasteners in aircraft wing box components in an aircraft wing box assembly jig.

9. A method of controlling the position of a computer numerical control machine tool, the machine tool comprising a machine head having one or more process tools and moveable with respect to a workpiece, a position sensor system including an ultrasonic probe, and a controller coupled to the position sensor, and the method comprises detecting the position of the machine head relative to the workpiece with the position sensor system, and closed loop control of the position of the machine head relative to the workpiece with the controller.

10. A method according to claim 9, further comprising measuring material thickness of the workpiece using the ultrasonic probe, preferably wherein the material thickness measuring step includes measuring the material thickness in the vicinity of a predetermined location on the workpiece, and preferably wherein the material thickness measuring step is performed by scanning along at least one axis of the machine tool, and further preferably wherein the scan is performed along two orthogonal axes of the machine tool.

11. A method according to claim 10, further comprising determining a geometric centre of a workpiece feature having a material thickness different to that of the workpiece feature environs using the position sensor system.

12. A method according to claim 10 or claim 11, further comprising determining the material thickness profile of a workpiece feature using the position sensor system.

13. A method according to any of claims 10 to 12, further comprising automatically performing a process machining operation on the workpiece once the machine head has been automatically aligned with workpiece using the position sensor system.

14. A method according to claim 13, further comprising using the machine tool for fully automated drilling of holes for final fasteners in aircraft wing box components in an aircraft wing box assembly jig.

15. A computer numerical control machine tool comprising a machine head having one or more process tools and moveable with respect to a workpiece, and an ultrasonic probe.
